# EUROPÄISCHE PATENTSCHRIFT

(11) **EP 1 703 037 B1**
(45) Veröffentlichungstag und Bekanntmachung des Hinweises auf die Patenterteilung: **02.01.2008**
(21) Anmeldenummer: 05003971.8
(22) Anmeldetag: 24.02.2005
(51) Int. Cl.: E04D 12/00, H01L 31/048, E04D 1/34, E04D 1/20

(54) **Dach- oder Fassadenverkleidung**
Roof or wall covering
Revêtement pour toit ou paroi

(43) Veröffentlichungstag der Anmeldung: 20.09.2006
(73) Patentinhaber: 3S Swiss Solar Systems AG, 3250 Lyss (CH)
(72) Erfinder: Szacsvay, Tamas, 3007 Bern (CH); Hofer-Noser, Patrick, 3013 Bern (CH)
(74) Vertreter: Secklehner, Günter

(56) Entgegenhaltungen:
- EP-A- 1 362 967
- WO-A-00/02256
- WO-A-00/30184
- WO-A-92/16972
- DE-A1- 1 815 290
- DE-A1- 3 713 320
- DE-A1- 3 929 800
- DE-A1- 19 921 044
- DE-U1- 29 710 657
- FR-A- 2 343 874
- FR-A- 2 809 431
- US-A- 4 262 464
- US-A1- 2004 011 354

## Beschreibung

Die Erfindung betrifft eine Dach- oder Fassadenverkleidung aus schuppenartig angeordneten, plattenförmigen Bauelementen, wobei jedes Bauelement mindestens ein Halteelement auf weist, das an der dem Gebäude zugewandten Innenseite des Bauelements angeordnet ist, wobei jedes Bauelement durch das mindestens eine Halteelement an einem im Wesentlichen horizontal angeordneten Tragelement fixiert ist, indem ein im Halteelement vorhandener, nach unten offener Schlitz das Tragelement klammerartig übergreift, wobei das mindestens eine Halteelement am Bauelement benachbart zum unteren, im Wesentlichen horizontal ausgerichteten Rand des Bauelements angeordnet ist und der das Tragelement übergreifende Schlitz des Halteelements diesem unteren Rand näher liegt als der oberen Stirnseite des Bauelements.

Bekannte Bauelemente, z.B. Dachziegel verfügen zu ihrer Fixierung an der Dachlattung über nach unten ragende Nasen an der Oberkante. Seitlich sind Nuten und Stege vorgesehen, welche mit den rechts und links benachbarten Elementen eine Labyrinthdichtung bilden gegen das Eindringen von Regen- oder Schmelzwasser. Wenn Dächer oder Fassaden anstelle von Ziegeln mit flachen, plattenförmigen Bauelementen bedeckt werden sollen, müssen sich diese in horizontaler Richtung überlappen (z.B. versetzte, geschindelte Anordnung) oder mit einer Vorrichtung zur Abdichtung in horizontaler Richtung versehen sein, und sind beispielsweise mit an der Unterkonstruktion fixierten Haken oder Haltebügeln befestigt, welche das Bauelement an der unteren Kante umgreifen und somit am Gebäude fixieren. Auch Maßnahmen für die Abdichtung in vertikaler Richtung sind erforderlich.

Die internationale Patentanmeldung WO 00/02256 A1 zeigt diesbezüglich eine Methode, bei der Aluminium-Strangprofile verwendet werden, welche an allen Kanten eines vorzugsweise rechteckigen, plattenförmigen Bauteiles befestigt sind, wobei der Bauteil photovoltaische Elemente enthält. Diese bilden am rechten und linken Rand eine Dichtung mit den benachbarten Bauteilen, in vertikaler Richtung wird mit Überlappung gedichtet, und die Bauteile werden mit an einer Dachlattung angeschraubten Haken jeweils an der Unterkante fixiert. Diese Methode hat beispielsweise die Nachteile, dass hierbei Haken vor der Verlegung der Bauteile einzeln an der Lattung angeschraubt werden müssen, und die elektrische Verschaltung der photovoltaischen Elemente an der dem Gebäude zugewandten Innenseite zu erfolgen hat. Aus ästhetischen Gründen wird zudem ein Aluminiumrahmen häufig als unvorteilhaft empfunden.

Die Patentanmeldungen JP 2003-276 042 A und JP 11-068 136 A erwähnen von einem Rahmen aus Kunststoff-Spritzguss ganz umgebene Solarmodule mit Glasscheibe, wobei es um die Spritzgusstechnik selbst und die Abdichtung des Randes der Solarmodule geht, bzw. die Montage der so umrahmten Solarmodule in einer umständlichen Art von Pfosten- und Riegelkonstruktion mit verschiedenen Spezialteilen. Somit bleibt die Aufgabe einer einfachen Verbindung mit dem Gebäude ungelöst, und die so entstehenden Solarmodule sind auch ungeeignet dafür, mit ihrer eigenen Struktur zwischen den einzelnen Solarmodulen abzudichten. Die Umspritzung einer Glasscheibe im Spritzgussverfahren ist insbesondere bei Autoscheiben Stand der Technik und somit nicht Gegenstand dieser Patentanmeldung.

Wieder andere Lösungen zur Befestigung von plattenförmigen Bauelementen wie Solarmodulen, wie z.B. in der Patentanmeldung DE 199 21 044 A1 beschrieben, verwenden eine Tragstruktur, welche über Falze und Überlappung unmittelbar an Standarddachziegel angeschlossen werden kann. Diese Tragstruktur weist im allgemeinen eine Breite auf, die derjenigen von mehreren Dachziegeln entspricht. Auf dieser Tragstruktur werden die plattenförmigen Bauelemente befestigt, und diese Tragstruktur wiederum an ihrer Außenseite an einer Dachlattung. Obwohl dies eine elegante Lösung darstellt, hat sie den Nachteil, dass für jeden Dachziegeltyp eine andere Tragstruktur hergestellt werden muss. Zudem müssen diese Bauelemente an der Lattung angeschraubt werden, um gemäß einschlägigen Anforderungen ausreichend sicher befestigt zu sein.

Die Patentanmeldung EP 1 362 967 A1 zeigt sich schuppenartig überlappend angeordnete plattenförmige Bauelemente, die aber keine in den Bauelementen selbst integrierte Vorrichtung zur Abdichtung zwischen den einzelnen Bauelementen in horizontaler Richtung aufweisen. Es sind auch keine an den Bauelementen angebrachten Halteelemente vorhanden, sondern Halteelemente in der Form von an einer Lattung angeschraubten Haltebügeln, welche durch die Überlappungszone zwischen den Bauelementen hindurch reichen und das obenliegende Bauelement an dessen unterem Rand fixieren. Dies hat den Nachteil, dass vorgängig zur Montage der Bauelemente sowohl Profilschienen zur Abdichtung der Bauelemente in horizontaler Richtung verlegt werden müssen, als auch die Halteelemente an der Lattung fixiert werden müssen.

Die Offenlegungsschrift DE 18 15 290 A1 offenbart einen Dachziegel, bei dem ein nahe bei seinem unteren Rand angeordneter Greifer ein an einer Unterkonstruktion befestigtes Tragglied und den oberen Rand eines unten benachbarter Dachziegels übergreift. Dabei muss dieses Tragglied einen im Wesentlichen parallel zur Ebene der Dachziegel orientierten Schenkel aufweisen, dessen Dicke und Abstand von der Unterkonstruktion den Abmessungen des Dachziegels angepasst sind.

Die Offenlegungsschrift DE 39 29 800 A1 betrifft eine Vorrichtung zum Befestigen einer Dacheindeckungsplatte. Es wird ein Befestigungsmittel beschrieben, mit welchem die betreffenden Dachplatten am traufseitigen Ende besonders zuverlässig niedergehalten und gesichert werden. Die Dacheindeckungsplatten weisen an ihrer Unterseite einen Befestigungsansatz auf, der mit einem in Richtung auf das traufseitige Ende geöffneten Schlitz versehen ist. In diesen Schlitz greift ein an der Dachkonstruktion befestigter Flansch ein. Der nach unten überstehende Endbereich der Dacheindeckungsplatte überlappt die nächstfolgende Dacheindeckungsplatte und verankert diese somit an der Dachkonstruktion. Ähnliche Vorrichtungen sind in den Dokumenten DE 37 13 320 A1 und FR 2 809 431 A1 offenbart. Diese drei Systeme haben den gemeinsamen Nachteil, dass das den Flansch tragende Profil derart abgestuft sein muss, dass der Flansch, der in den genannten Schlitz eingreift, mindestens um die Dicke der Dacheindeckungsplatte weiter von der Unterkonstruktion entfernt ist als ein weiterer, dem genannten Flansch gegenüberliegender Flansch, auf dem die nächstfolgende Dacheindeckungsplatte mit ihrem oberen Rand aufliegt. Es ist also erforderlich, dass die Dicke der Dacheindeckungsplatten und die Abmessungen des Profils aufeinander abgestimmt sind. Wenn die Dacheindeckungsplatten photovoltaische Elemente enthalten, können deren elektrische Anschlüsse nicht an der oben liegenden Stirnseite der Dacheindeckungsplatten angeordnet sein, weil diese Stirnseite durch das Profil verdeckt ist. Schließlich ist es wegen der abgestuften Profile schwierig, einen seitlichen Randabschluss der Dacheindeckung, beispielsweise aus Blech, anzufertigen.

Ausgehend von diesem Stand der Technik liegt der Erfindung die Aufgabe zugrunde, eine Dach- oder Fassadenverkleidung vorzuschlagen, die gegen Beschädigungen geschützt ist, einen einfachen Aufbau aufweist, äußerst einfach zu montieren ist und auch kein speziell abgestuftes Profil benötigt.

Diese Aufgabe wird erfindungsgemäß dadurch gelöst, dass die sich näher beim Bauelement befindende Seite des Schlitzes und der der oberen Stirnseite benachbarte obere Rand des unten benachbarten Bauelements auf der gleichen Fläche des Tragelements aufliegen und dass das Bauelement aus mindestens einem Plattenteil und einem den Plattenteil mindestens teilweise umgebenden Rahmen besteht.

Bedingt durch die Position der Halteelemente in der unteren Hälfte des Bauelements wird dabei vornehmlich dessen unterer Rand fixiert. Der obere Teil des Bauelements bzw. dessen Rahmen liegt unter dem in der nächst oberen Reihe angeordneten Bauelement. Somit wird in vertikaler Richtung durch Überlappung eine Dichtung gebildet gegen das Eindringen von Staub, Schmutz, Schnee, Regen- und Schmelzwasser. Gleichzeitig wird das untenliegende Bauelement an seiner Oberkante gegen Windsog gesichert. Somit kann auf an der Unterkonstruktion z.B. mittels Schrauben befestigte Halteelemente verzichtet werden, welche zur Fixierung des unteren Randes von schuppenartig angeordneten Bauelementen zwischen den Bauelementen durch die Überlappungszone geführt werden müssten. Dies bedingte an dieser Stelle entweder einen erheblichen Spalt zwischen den Bauelementen, oder eine spezielle Ausformung zur Durchführung der Halteelemente an der entsprechenden Stelle. Einen Spalt abzudichten oder eine Ausformung zu erstellen bedeutet zusätzlichen Aufwand. Der Abstand des Schlitzes vom Bauelement erlaubt es, dass der obere Rand des unten benachbarten Bauelementes auf der gleichen Ebene des Tragelementes aufliegt, an der auch der Schlitz angreift. Somit ist als Tragelement kein speziell abgestuftes Profil erforderlich, wie dies bei den aus dem Stand der Technik bekannten Vorrichtungen der Fall ist. Dies birgt den zusätzlichen Vorteil, dass die obere Stirnseite des Bauelements nicht wie bei den bekannten Konstruktionen durch eine Wand des Profils abgedeckt ist, sondern zugänglich bleibt, so dass dort elektrische Anschlussstellen angeordnet werden können, wenn das Bauelement photovoltaische Elemente enthält. Zudem wird durch den Rahmen jedes Bauelement an den Kanten rundherum vor mechanischer Beschädigung geschützt.

Nach einer Ausführungsart ist das Halteelement am Rahmen angeordnet und bevorzugt einstückig mit dem Rahmen verbunden. Dies begünstigt die Kraftübertragung auf das Tragelement, wobei das Plattenelement nicht direkt belastet wird.

Wenn nach einer weiteren Ausführungsart der Rahmen aus Kunststoff besteht und vorzugsweise im Spritzgussverfahren hergestellt ist, wird eine kostengünstige Herstellung in großen Stückzahlen erleichtert. Eine weitere Vereinfachung bei der Herstellung der Bauelemente ergibt sich, wenn nach einer Ausführungsart der Plattenteil mit dem Rahmen durch Umspritzen des Plattenteils verbunden ist.

Nach noch einer Ausführungsart ist das Tragelement als auf einer Unterkonstruktion zu befestigender Profilstab ausgebildet ist, welcher einen von der auf der Unterkonstruktion aufzuliegen bestimmten Grundfläche beabstandeten, nach oben weisenden Schenkel aufweist.
Durch den Abstand von der Unterkonstruktion ist der genannte Schenkel auf der ganzen Länge des Tragelements frei und die Unterkonstruktion kann somit unabhängig vom durch die Bauelemente gegebenen Raster erstellt werden.

Nach einer anderen Ausführungsart ist im Überlappungsbereich der untere Rand des Bauelements an der dem Tragelement zugewandten Fläche und/oder der obere Rand des Bauelements an der dem Tragelement abgewandten Fläche aufgeraut oder mit Rillen und/oder Rippen versehen ist. Durch diese Maßnahme wird Kapillarbildung im Überlappungsbereich der Bauelemente behindert, aber dennoch das Abfließen von sich allfällig bildendem Kondenswasser ermöglicht.

Nach einer weiteren Ausführungsart sind die seitlichen Ränder jedes Bauelements mit Elementen ausgestaltet, die mit entsprechenden Elementen des horizontal benachbarten Bauelements in dichtendem Eingriff stehen. Dadurch wird das Eindringen von Staub, Schmutz, Schnee, Regen und Schmelzwasser verhindert.

Nach einer weiteren Ausführungsart überragt der Rahmen am unteren Rand den Plattenteil senkrecht zur Ebene des Plattenteils nicht. Dadurch wird insbesondere bei einer Dachverkleidung vermieden, dass sich am unteren Rand der Bauelemente eine Ansammlung von Schmutz bildet.

Eine weitere Ausführungsart sieht vor, dass das Bauelement auf seiner Rückseite bzw. Innenseite ein flächiges Element aus nicht brennbarem Material enthält. Dieses Element verhindert, dass Teile herunterfallen, wenn das Plattenelement bricht, was beispielsweise bei einem Brand des betreffenden Gebäudes vorkommen könnte.

Nach einer bevorzugten Ausführungsart der Erfindung ist mindestens ein Teil des Plattenteils als photovoltaisches Element ausgebildet oder enthält solche. Durch den Rahmen sind die photovoltaischen Elemente in vorteilhafter Weise vor mechanischen Belastungen und damit vor Beschädigungen geschützt.

Eine andere Ausführungsart sieht vor, dass der Rahmen am oberen Rand des Bauelements so breit und der Abstand zwischen den Tragelementen so gewählt ist, dass der untere Rand des oben benachbarten Bauelements das photovoltaische Element nicht oder maximal um 5% der vertikalen Länge des photovoltaischen Elements überragt. Dadurch werden Verluste bei der Stromproduktion infolge Beschattung durch oben benachbarte Bauelemente vermieden oder auf ein Minimum beschränkt.

Nach einer Ausführungsart ist im oberen Rand des Bauelements mindestens eine elektrische Anschlussstelle angeordnet, welche vorzugsweise von der Stirnseite des oberen Randes zugänglich ist. Dadurch ist eine elektrische Verschaltung auch der bereits verlegten Bauelemente am oberen Rand möglich, anstatt wie bisher zumeist üblich an der schlechter zugänglichen Innenseite des Bauelements.

Nach einer anderen Ausführungsart sind die photovoltaischen Elemente an der Innenseite des Plattenteils angeordnet und der Rahmen ist so ausgebildet, dass er die wasserdichte Verkapselung der photovoltaischen Elemente bildet und die Außenseite des Plattenteils wasserdicht ist.

Besondere Ausführungsarten der Erfindung werden nachstehend unter Bezugnahme auf die beiliegenden Zeichnungen beispielsweise näher erläutert. Es zeigt
- Fig. 1: Stand der Technik, Vorrichtung mit flachen, plattenförmigen Bauelementen;
- Fig. 2: Ausschnitt aus einem Dach mit montierten Bauelementen;
- Fig. 3: Ansicht Außenseite des Bauelements;
- Fig. 4: Ansicht Innenseite des Bauelements;
- Fig. 5: Seitenansicht von montierten Bauelementen;
- Fig. 6: Ausschnitt, Überlappungszone und Halteelement;
- Fig. 7: Ausschnitt, Übergang zwischen den Bauelementen in horizontaler Richtung;

- Fig. 8: Ausschnitt, oberer Teil des Bauelements mit elektrischem Anschluss;
- Fig. 9: Ausschnitt, Beispiel einer rückseitigen wasserdichten Verkapselung von photovoltaischen Elementen mittels des Rahmens im Fall von zusätzlicher Einbettung der Photovoltaischen Elemente mit einem nicht wasserdichten Material;
- Fig. 10: Ausschnitt, Beispiel einer rückseitigen wasserdichten Verkapselung von photovoltaischen Elementen mittels des Rahmens im Fall ohne zusätzlicher Einbettung der Photovoltaischen Elemente;
- Fig. 11: eine perspektivische Ansicht von unten auf ein Bauelement mit einer anderen Ausführungsart der Halteelemente.

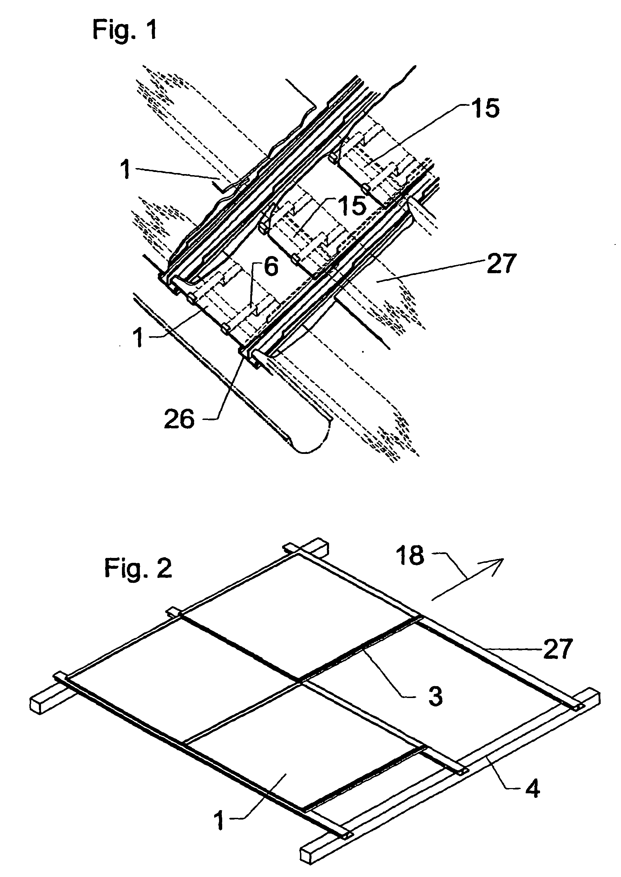

Figur 1 zeigt in einer perspektivischen Ansicht eine Vorrichtung mit flachen, plattenförmigen Bauelementen 1, wie sie aus der eingangs genannten Publikation EP 1 362 967 A1 bekannt geworden ist. Nebeneinander liegende Reihen von untereinander angeordneten, sich schuppenartig überlappenden flachen, plattenförmigen Bauelementen 1 bilden eine Verkleidung eines Daches oder einer Fassade. Jedes Bauelement 1 wird durch zwei als Haken ausgebildete Halteelemente 6 an einem als Dachlatte ausgebildeten Tragelement 27 festgehalten, wobei die Halteelemente 6 aber nicht fest an den Bauelementen 1 angeordnet sind. Die Halteelemente 6 reichen durch die Überlappungszone 15 zwischen den Bauelementen 1 hindurch und fixieren das oben liegende Bauelement an dessen unterem Rand. Dies hat den Nachteil, dass vorgängig zur Montage der Bauelemente 1 sowohl Profilschienen 26 zur Abdichtung der Bauelemente in horizontaler Richtung verlegt werden müssen, als auch die Halteelemente an den als Lattung ausgebildeten Tragelementen 27 befestigt werden müssen.

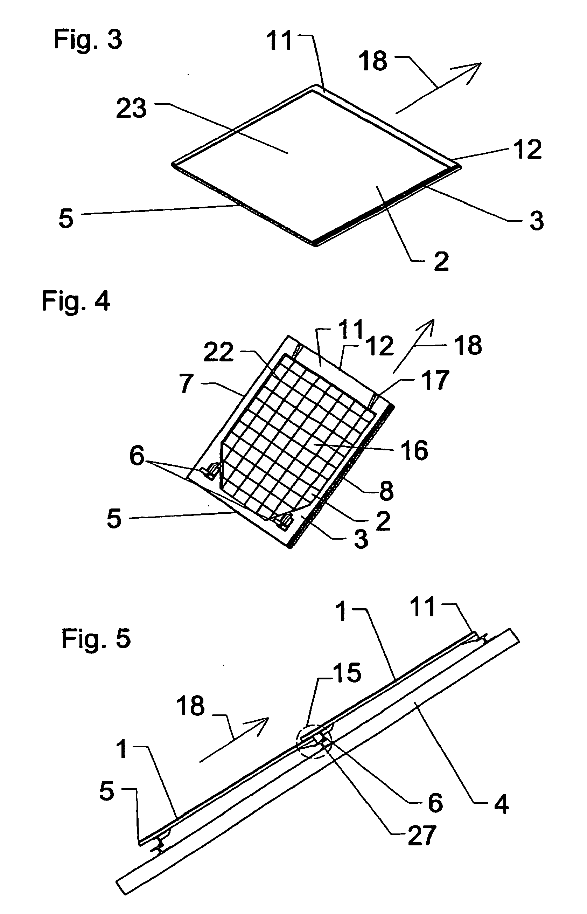

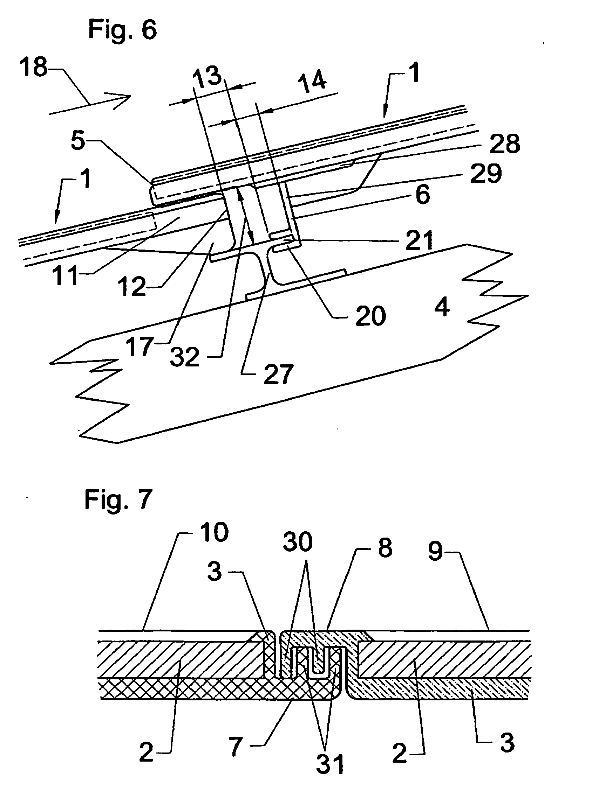

Figur 2 der Zeichnung zeigt in einer perspektivischen Ansicht von oben einen Ausschnitt aus einem Dach, das mittels erfindungsgemäßen Bauelementen 1 gedeckt ist. Die Bauelemente 1 können photovoltaische Elemente enthalten. Die Bauelemente 1 überlappen sich in vertikaler Richtung, sind also schuppenartig und in Reihen angeordnet. Die Halterung der Bauelemente 1 erfolgt mittels integrierter Halteelemente 6 (Figuren 4 bis 6) an im Wesentlichen horizontal angeordneten Tragelementen 27. Letztere sind auf einer konventionellen Unterkonstruktion 4 angeordnet. In horizontaler Richtung sind die Bauelemente 1 so ausgebildet und angeordnet, dass die Strukturen der Rahmen 3 zweier nebeneinander liegender Bauelemente 1 ineinander greifen und so eine Dichtung bilden, wie dies nachstehend anhand der Figur 7 noch genauer beschrieben wird. Der genannte Rahmen 3 wird anhand der Figuren 4, 6 und 7 näher beschrieben.

Figur 3 zeigt eine perspektivische Ansicht auf die Außenseite 23 des Bauelements 1, das heißt auf die im montierten Zustand des Bauelements 1 vom betreffenden Gebäude abgewandte Seite, und Figur 4 zeigt eine perspektivische Ansicht auf die Innenseite 16 des Bauelements 1. In dieser besonderen Ausführungsart wurde dem Plattenteil 2 des Bauelements 1 mittels Spritzgusstechnik ein Rahmen 3 aus Kunststoff angespritzt. Dieser Rahmen 3 umgibt den Plattenteil 2 an dessen Kanten und stellenweise bedeckt er auch dessen Innen- wie Au-ßenseite. In gewissen Anwendungen kann der Rahmen 3 auch die ganze Innenseite 16 des Plattenteils 2 bedecken, z.B. in einem Fall, in dem der Plattenteil 2 an der Innenseite als unverkapseltes photovoltaisches Element ausgebildet ist. Der Rahmen 3 kann auch ein brandfestes, flächiges Element 22 wie z.B. ein Stahldraht- oder Glasfasernetz beinhalten, um Teile des Bauelements 1 insbesondere des Plattenteils 2 im Brandfall des betreffenden Gebäudes bei Bruch des Plattenteils 2 daran zu hindern herunterzufallen. Der Pfeil 18 bezeichnet die Richtung nach oben bei verlegten Bauelementen 1.

In der skizzierten Ausführungsart sind zwei Halteelemente 6 mit dem Bauelement 1 bzw. dessen Rahmen 3 verbunden. Sie könnten auch direkt an der Innenseite des Plattenteils 2 des Bauelements 1 angebracht sein. Selbstverständlich kann je nach der Form und Größe des Bauelements 1 nur ein einziges Halteelement 6 oder auch mehr als zwei Halteelemente 6 vorgesehen sein. Diese Halteelemente 6 können z.B. wie hier skizziert aus einem separaten, angegossenen (Figur 11) oder anderweitig am Bauelement befestigten Teil bestehen, ganz aus Spritzguss sein oder eine Kombination davon. Ihre Position ist in der unteren Hälfte des montierten Bauelements 1, auf dessen Innenseite 16. Ganz oben auf der Innenseite sind Auf lager 17 zu erkennen, mit denen das montierte Bauelement 1 auf einem Tragelement 27 (Figur 5) aufliegt, das beispielsweise als Profilschiene ausgebildet sein kann, wie später noch anhand der Figur 6 erläutert wird. Am rechten Rand 7 und am linken 8 Rand sind Dichtungsmaßnahmen zum nächsten anliegenden Bauelement integriert, welche detailliert in Figur 7 dargestellt sind.

Der in Figur 4 skizzierte Rahmen 3 umgibt den Plattenteil 2 an seinen Kanten an allen vier Seiten. Damit wird im dem Fall, dass der Plattenteil 2 als photovoltaisches Element ausgebildet ist oder solche enthält, der Rand dieses Plattenteils 2 mittels dieses Rahmens 3 zusätzlich zu allenfalls vorhandenen Dichtungsmaßnahmen gegen eintretende Feuchtigkeit geschützt. In dem skizzierten Ausführungsbeispiel wurde jedoch darauf geachtet, dass der Rahmen 3 am unteren Rand 5 des Bauelements 1 nicht gegenüber der Ebene der Außenseite 23 des plattenförmigen Bauelements hervorsteht, damit Wasser frei abfließen kann, und die Ansammlung von Verschmutzung vermieden wird (vgl. Fig. 6).

Figur 5 zeigt in Seitenansicht die Anordnung der Bauelemente 1 auf einem Dach. Auf einer Unterkonstruktion 4 sind im wesentlichen horizontal verlaufende Tragelemente 27 angeordnet, auf denen die Bauelemente 1 direkt aufliegen und mittels der Halteelemente 6 festgehalten werden. Auf die Ausgestaltung der Tragelemente 27 wird im Zusammenhang mit Figur 6 noch näher eingetreten. Die Bauelemente 1 sind derart schuppenartig verlegt, dass der untere Rand 5 eines Bauelements 1 die obere Stirnseite 12 des benachbarten Bauelements 1 überlappt.

Figur 6 zeigt die in Figur 5 mit 15 bezeichnete Überlappungszone in einem gegenüber der Figur 5 vergrößerten Maßstab. Die Unterkonstruktion 4 kann zum Beispiel aus herkömmlichen Dachsparren oder einer Konterlattung bestehen, auf denen die Tragelemente 27 im Wesentlichen horizontal angeordnet und befestigt sind. Im Falle einer (nicht dargestellten) Fassadenverkleidung kann die Unterkonstruktion 4 beispielsweise durch Konterlatten gebildet sein. Wie Figur 6 deutlich zeigt, sind die Tragelemente 27 in diesem Beispiel als Profilschienen mit einem Doppel-T-Profil ausgebildet. An Stelle eines Doppel-T-Profils könnte das Tragelement 27 auch einen anderen Querschnitt haben, beispielsweise einen U-förmigen Querschnitt. Wichtig ist nur, dass das Tragelement 27 einen nach oben in Richtung des Pfeils 18 weisenden freien Schenkel 21 hat, an dem das Halteelement 6 in der nachstehend beschriebenen Weise angreifen kann und der breit genug ist, dass das unten benachbarte Bauelement 1 mit seinen Auflagern 17 daran anliegen kann. Jedes Halteelement 6 ist mit einem Basisteil 28 am Bauelement 1 angeordnet. Der Basisteil 28 kann beispielsweise mit dem Rahmen 3 verbunden sein, wie dies in Figur 4 dargestellt ist, wobei vorzugsweise das ganze Halteelement mit dem Rahmen 3 einstückig geformt ist. Anschließend an den Basisteil weist das Halteelement 6 ein Distanzelement 29 und an dessen Ende einen Schlitz 20 auf. Mit diesem Schlitz 20 umgreift das Halteelement 6 den genannten Schenkel 21 des Tragelements 27 und hält das Bauelement 1 in einem Abstand 32 vom Tragelement. Der Abstand 32 ist dabei so bemessen, dass das unten benachbarte Bauelement 1 mit seinem oberen Rand 11 zwischen dem Schenkel 21 des Tragelements 27 und dem unteren Rand 5 des Bauelements 1 Platz findet. Das Tragelement muss also nicht, wie bei den eingangs erwähnten bekannten Vorrichtungen, abgestuft sein, sondern es könnte im einfachsten Fall als Flachprofil ausgebildet sein. Wenn das Tragelement 27 wie im dargestellten Beispiel als Doppel-T-Profil ausgebildet ist, ergibt sich als weiterer Vorteil, dass beim Aufbau der Unterkonstruktion 4 nicht auf den horizontalen Abstand der die Unterkonstruktion bildenden Elemente, beispielsweise Sparren oder Konterlatten geachtet werden muss, weil der Schenkel 21 in einem Abstand von der Unterkonstruktion 4 angeordnet ist und sich somit die Unterkonstruktion 4 und die Halteelemente 6 am Tragelement 27 nicht in die Quere kommen.

Wie weiter aus Figur 6 ersichtlich ist, ist die obere Stirnseite 12 jedes Bauelements 1 um einen Abstand 13 vom Schlitz 20 des Halteelements 6 des oben benachbarten Bauelements 1 entfernt, wobei dieser Abstand 13 größer ist als die Tiefe 14 des Schlitzes 20 des Halteelements 6. Dies hat zur Folge, dass jedes derart eingebaute Bauelement 1 jederzeit wieder ausgebaut und beispielsweise ersetzt werden kann, ohne benachbarte Bauelemente 1 ganz entfernen zu müssen. Dies kann zu Reparaturzwecken oder zur Erweiterung eines Daches oder einer Fassade nötig sein. Zum Ausbauen wird das Bauelement 1 so weit nach oben (Pfeil 18) geschoben, bis die Schlitze 20 seiner Halteelemente 6 nicht mehr am Schenkel 21 des Tragelements 27 eingehängt sind. Darüber hinaus hat diese Konstruktionsart den Vorteil, dass bei der Erstmontage die Bauelemente 1 in ihrer Reihenfolge sowohl von oben nach unten als auch von unten nach oben, in Richtung des Pfeils 18, verlegt werden können.

Der Bereich der Bauelemente 1 bzw. deren Rahmen 3, der zwischen zwei oben- und untenliegenden Bauelementen 1 in der Überlappungszone 15 liegt, ist aufgeraut oder mit Rillen versehen, wie dies in der Figur 6 angedeutet ist. Damit wird verhindert, dass dort auf der Au-ßenseite vorhandenes Meteorwasser mittels Kapillarbildung eindringt durch den allenfalls vorhandenen, durch bau- und produktionstechnisch bedingte Ungenauigkeiten hervorgerufenen Spalt, wenngleich er sehr gering ist. Dennoch gewährleistet diese spezielle Ausgestaltung, dass ein Abfließen von allfällig auf der Innenseite der Bauelemente 1 sich ansammelndem Kondenswasser möglich ist. Die oben im Zusammenhang mit Figur 4 erwähnten Auflager 17 sichern eine gute Hinterlüftung der Bauelemente 1 und ermöglichen durch den entstehenden Abstand der Bauelemente zum Tragelement 27 und zur Unterkonstruktion 4 einen einfachen Anschluss an herkömmliche Baumaterialien z.B. mittels Anschlussblechen. Zudem bringen die Auflager 17 das Bauelement auf die gleiche Dicke und in die gleiche Ebene wie herkömmliche Dachziegel.

Figur 7 zeigt im Querschnitt einen Ausschnitt zweier nebeneinander angeordneter Bauelemente 9 und 10. Wie in der Figur deutlich zu erkennen ist, sind am linken Rand 8 des rechts angeordneten Bauelements 9 nach unten gerichtete Längsrippen 30 und am rechten Rand 7 des links angeordneten Bauelements 10 noch oben gerichtete Längsrippen 31 angeordnet. Diese Längsrippen 30, 31 greifen ineinander ein und bilden eine Labyrinthdichtung.

Im vorangehend beschriebenen Ausführungsbeispiel ist vorwiegend ganz allgemein von flachen, plattenförmigen Bauelementen 1 die Rede. In besonders bevorzugter Weise können die Plattenteile 2 dieser Bauelemente 1 photovoltaische Bauelemente enthalten oder als solche ausgebildet sein. Diese Bauelemente 1 können ohne weitere Befestigungsteile an geeigneten Unterkonstruktionen montiert werden, vorzugsweise auf hinterlüfteten, um den Wirkungsgrad der photovoltaischen Elemente durch möglichst tiefe Temperaturen zu steigern. Nebst der Elektrizitätserzeugung haben solche Bauelemente die Funktion einer witterungsbeständigen Dach- oder Fassadenhaut, wie Dachziegel, Schiefer, Faserzementplatten, Keramikplatten etc. Die beschriebenen, erfindungsgemäßen Bauelemente 1 sind geeignet verschiedenste photovoltaische Elemente einzusetzen. Es können z.B. monokristalline, polykristalline, wie auch Dünnschicht-Solarzellen (amorph, nanokristallin, microkristallin, CIS etc.) unterschiedlicher Bauart, Größe und Farbe verwendet werden.

Die erfindungsgemäßen Bauelemente lassen im weiteren auch unterschiedliche Aufbauten von photovoltaischen Modulen als Bestandteile zu, wie zum Beispiel transparente und opake Glas / Folien-Laminate, Glas / Glas-Laminate und photovoltaische Elemente aus Gießharz. Ferner können Bauelemente eingesetzt werden, die normale Glasplatten und Blindplatten etc. enthalten, beispielsweise zur Realisierung von Kamindurchführungen, Dachfenstern, Umrahmung von Lüftungsrohren oder zur Verlegung an besonders stark beschatteten Abschnitten.

Die Montage dieser photovoltaischen Bauelemente 1 ist einfach, schnell und somit kostengünstig. Da keine außergewöhnliche Unterkonstruktion notwendig ist, d.h. im Wesentlichen nur Profilschienen 27 auf eine konventionelle Unterkonstruktion 4 aufgebracht werden, kann die Montage von instruiertem Fachpersonal des konventionellen Dach- und Fassadenbaus ausgeführt werden. Die photovoltaischen Bauelemente werden dabei einfach mittels der darin integrierten Halteelemente 6 in die Profilschiene 27 eingehängt.

Die elektrische Verschaltung der einzelnen erfindungsgemäßen photovoltaischen Bauelemente 1 bei der Montage wird vorzugsweise vorgenommen, wenn das entsprechende Bauelement bereits an seiner vorgesehenen Position an der Unterkonstruktion fixiert ist. Da dann bereits elektrische Spannung an dessen elektrischen Anschlüssen anliegt, bedingt dies ein elektrisches Anschlusssystem mit berührungs- und verpolungssicheren Verbindungen, damit diese Arbeiten vom oben erwähnten Fachpersonal ausgeführt werden dürfen. Die erforderlichen elektrischen Sammelleitungen, elektrischen Sammelkästen, Hauptleitungen, Erdungsleitungen etc. werden zumeist vorgängig von einem Fachelektriker installiert.

Weil nebst der bereits erwähnten Kompatibilität der erfindungsgemäßen Bauelemente 1 mit konventionellen Gebäudeverkleidungsmaterialien auch die erforderliche Unterkonstruktion mit konventionellen Unterkonstruktionen kompatibel ist, können die erfindungsgemäßen Bauelemente 1 beliebig mit anderen Dach- und Fassadeneindeckungen, wie z.B. Dachziegeln, Schiefem, Faserzementplatten, Keramikplatten etc. kombiniert werden oder solche nachträglich ersetzen.

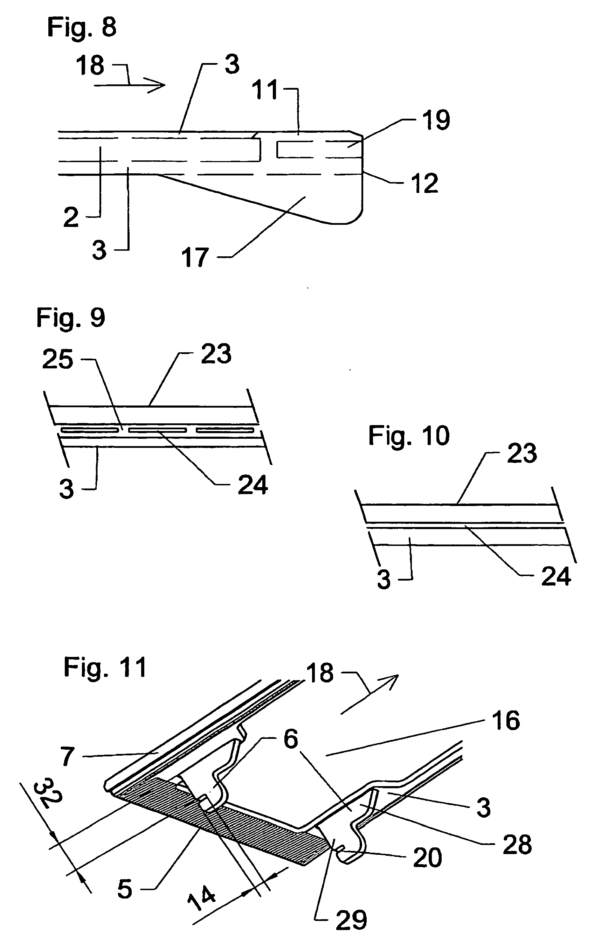

Figur 8 zeigt einen Ausschnitt des oberen Teils des Bauelements 1 mit einem schematisch dargestellten elektrischen Anschluss 19 an der in montiertem Zustand oben angeordneten Stirnseite 12 des Bauelements 1. Bei den meisten bekannten Solar-Dachelementen befinden sich die elektrischen Anschlüsse auf der Rückseite, was das Anschließen umständlich macht, weil dieses vor der Verlegung am noch nicht fixierten Bauelement erfolgen muss. Die hier gezeigte Platzierung des Anschlusses 19 in der Ebene des Bauelements 1 vermeidet diesen Nachteil. Das elektrische Anschließen dieses Bauelements 1 erfolgt unmittelbar nach dem Verlegen, wobei wie erwähnt die Bauelemente vorteilhaft von unten nach oben verlegt werden.

In Figur 9 ist in einem Ausschnitt ein Bauelement mit einer rückseitigen wasserdichten Verkapselung von photovoltaischen Elementen 24 mittels des Rahmens 3 dargestellt. Dabei sind die photovoltaischen Elemente 24 zusätzlich mit einem zum Witterungsschutz der photovoltaischen Elemente nicht ausreichend wasserdichten Material 25 wie beispielsweise EVA (Ethyl Vinyl Acetat) eingebettet.

Figur 10 zeigt in einem ähnlichen Ausschnitt wie Figur 9 ein Beispiel einer rückseitigen wasserdichten Verkapselung von photovoltaischen Elementen 24 mittels des Rahmens 3 im Fall ohne zusätzlicher Einbettung der Photovoltaischen Elemente 24.

Wenn der Plattenteil 2 wie beschrieben als photovoltaisches Element ausgebildet ist oder solche enthält, ist es besonders vorteilhaft, wenn, wie in Figur 6 ersichtlich, der Rahmen 3 am oberen Rand 11 des Bauelements so breit ist, dass der untere Rand 5 des oben benachbarten Bauelements 1 das photovoltaische Element nicht überragt.

Figur 11 zeigt eine perspektivische Ansicht von unten auf ein Bauelement mit einer anderen Ausführungsart der Halteelemente. Wie man deutlich sieht, ist hier der Basisteil 28 und das Distanzelement 29 jedes Halteelements 6 gleich breit und einstückig mit dem Rahmen 3 des Bauelements geformt. Die Schlitze 20 können dabei beim Herstellen des Rahmens 3 mit eingeformt, oder nachträglich durch Fräsen hergestellt sein.

### Bezugszeichenaufstellung

- 1: Bauelement
- 2: Plattenteil von 1
- 3: Rahmen von 1
- 4: Unterkonstruktion, z.B. Konterlatte
- 5: Unterer Rand des Bauelements

- 6: Halteelement
- 7: Rechter Rand von 10
- 8: Linker Rand von 9
- 9: Rechts angeordnetes Bauelement
- 10: Links angeordnetes Bauelement

- 11: Oberer Rand von 1
- 12: Obere Stirnseite
- 13: Abstand zwischen 12 und 6 bzw. 20
- 14: Schlitztiefe
- 15: Überlappungszone

- 16: Innenseite des Bauelements
- 17: Auflager von 1 am oberen Rand
- 18: Richtung nach oben in der Ebene der plattenförmigen Bauelemente
- 19: Elektrische Anschlussstelle
- 20: Schlitz

- 21: Schenkel von 27
- 22: Element aus nicht brennbarem Material
- 23: Außenseite des Bauelements
- 24: Photovoltaische Elemente
- 25: Photovoltaische Elemente einbettendes, im Allgemeinen nicht wasserdichtes Material

- 26: Wasserabführende Profilschienen
- 27: Tragelement
- 28: Basisteil von 6
- 29: Distanzelement von 6
- 30: Längsrippen an 8

- 31: Längsrippen an 7
- 32: Distanz zwischen 27 und 3

## Patentansprüche

1. Dach- oder Fassadenverkleidung aus schuppenartig angeordneten, plattenförmigen Bauelementen (1), aus Halteelementen (6) und aus Tragelementen (27), wobei jedes Bauelement (1) in Gebrauchsstellung einen oberen Rand (11), einen unteren Rand (5), seitliche Ränder (7, 8), eine Außenseite (23) und eine Innenseite (16) aufweist, wobei jedes Bauelement (1) mindestens ein Halteelement (6) auf weist, das an der dem Gebäude zuzuwendenden Innenseite (16) des Bauelements (1) angeordnet ist, wobei jedes Bauelement (1) durch das mindestens eine Halteelement (6) an einem im Wesentlichen horizontal angeordneten Tragelement (27) fixiert ist, indem ein im Halteelement (6) vorhandener, nach unten offener Schlitz (20) das Tragelement (27) klammerartig übergreift, wobei das mindestens eine Halteelement (6) am Bauelement (1) benachbart zum unteren, im Wesentlichen horizontal ausgerichteten Rand (5) des Bauelements (1) angeordnet ist und der das Tragelement (27) übergreifende Schlitz (20) des Halteelements (6) diesem unteren Rand (5) näher liegt als der oberen Stirnseite (12) des Bauelements (1), und dass der Abstand des Schlitzes (20) von der Innenseite (16) des Bauelements mindestens der Dicke des Bauelements (1) an dessen oberer Stirnseite (12) entspricht, **dadurch gekennzeichnet, dass** die sich näher zum Bauelement (1) befindende Seite des Schlitzes (20) und der der oberen Stirnseite (12) benachbarte obere Rand (11) des unten benachbarten Bauelements auf der gleichen Fläche des Tragelements (27) aufliegen und dass das Bauelement (1) aus mindestens einem Plattenteil (2) und einem den Plattenteil (2) mindestens teilweise umgebenden Rahmen (3) besteht.

2. Dach- oder Fassadenverkleidung nach Anspruch 1, **dadurch gekennzeichnet, dass** das Halteelement (6) am Rahmen (3) angeordnet ist.

3. Dach- oder Fassadenverkleidung nach Anspruch 2, **dadurch gekennzeichnet, dass** das Halteelement (6) einstückig mit dem Rahmen (3) verbunden ist.

4. Dach- oder Fassadenverkleidung nach einem der vorangehenden Ansprüche, **dadurch gekennzeichnet, dass** der Rahmen (3) aus Kunststoff besteht und vorzugsweise im Spritzgussverfahren hergestellt ist.

5. Dach- oder Fassadenverkleidung nach Anspruch 4, **dadurch gekennzeichnet, dass** der Plattenteil (2) mit dem Rahmen (3) durch Umspritzen des Plattenteils (2) verbunden ist.

6. Dach- oder Fassadenverkleidung nach einem der vorangehenden Ansprüche, **dadurch gekennzeichnet, dass** das Tragelement (27) als auf einer Unterkonstruktion (4) zu befestigender Profilstab ausgebildet ist, welcher einen von der auf der Unterkonstruktion (4) aufzuliegen bestimmten Grundfläche beabstandeten, in Richtung nach oben (18) weisenden Schenkel (21) aufweist.

7. Dach- oder Fassadenverkleidung nach einem der vorangehenden Ansprüche **dadurch gekennzeichnet, dass** im Überlappungsbereich zwischen den Bauelementen (1) der untere Rand (5) des Bauelements (1) an der dem Tragelement (27) zugewandten Fläche und/oder der obere Rand (11) des Bauelements (1) an der dem Tragelement (27) abgewandten Fläche aufgeraut oder mit Rillen und/oder Rippen versehen ist.

8. Dach- oder Fassadenverkleidung nach einem der vorangehenden Ansprüche, **dadurch gekennzeichnet, dass** die seitlichen Ränder (7, 8) jedes Bauelements (1) mit Elementen (30, 31) ausgestaltet sind, die mit entsprechenden Elementen (31, 30) des horizontal benachbarten Bauelements in dichtendem Eingriff stehen.

9. Dach- oder Fassadenverkleidung nach einem der vorangehenden Ansprüche, **dadurch gekennzeichnet, dass** der Rahmen (3) am unteren Rand (5) den Plattenteil (2) senkrecht zur Ebene des Plattenteils (2) nicht überragt.

10. Dach- oder Fassadenverkleidung nach einem der vorangehenden Ansprüche, **dadurch gekennzeichnet, dass** das Bauelement (1) auf seiner Innenseite (16) ein flächiges Element (22) aus nicht brennbarem Material enthält.

11. Dach- oder Fassadenverkleidung nach einem der vorangehenden Ansprüche, **dadurch gekennzeichnet, dass** mindestens ein Teil des Plattenteils (2) als photovoltaisches Element ausgebildet ist oder solche enthält.

12. Dach- oder Fassadenverkleidung nach Anspruch 11, **dadurch gekennzeichnet, dass** der Rahmen (3) am oberen Rand (11) des Bauelements (1) so breit und der Abstand zwischen den Tragelementen (27) so gewählt ist, dass der untere Rand (5) des oben benachbarten Bauelements (1) das photovoltaische Element nicht oder maximal um 5% der vertikalen Länge des photovoltaischen Elements überragt.

13. Dach- oder Fassadenverkleidung nach Anspruch 11 oder 12, **dadurch gekennzeichnet, dass** im oberen Rand (11) des Bauelements mindestens eine elektrische Anschlussstelle (19) angeordnet ist, welche vorzugsweise von der Stirnseite (12) des oberen Randes (11) zugänglich ist.

14. Dach- oder Fassadenverkleidung nach einem der Ansprüche 11 bis 13, **dadurch gekennzeichnet, dass** die photovoltaischen Elemente an der Innenseite (16) des Plattenteils (2) angeordnet sind, dass der Rahmen (3) so ausgebildet ist, dass er die wasserdichte Verkapselung der photovoltaischen Elemente bildet und dass die Außenseite (23) des Plattenteils (2) wasserdicht ist.

## Claims

1. Roof or wall covering comprising panel-shaped components (1) disposed in a scale pattern comprising retaining elements (6) and support elements (27), and every component (1) disposed in the fitted position has a top edge (11), a bottom edge (5), side edges (7, 8), an external face (23) and an internal face (16), and each component (1) has at least one retaining element (6) disposed on the internal face (16) of the component (1) designed to be positioned facing the building, and each component (1) is secured on an essentially horizontally disposed support element (27) by means of the at least one retaining element (6) due to a slot (20) provided in the retaining element (6) which is open at the bottom and extends round the support element (27) in a clamping arrangement, and the at least one retaining element (6) is disposed on the component (1) adjacent to the bottom essentially horizontally oriented edge (5) of the component (1) and the slot (20) of the retaining element (6) extending round the support element (27) lies closer to this bottom edge (5) than the top end face (12) of the component (1), and the distance of the slot (20) from the internal face (16) of the component corresponds to at least the thickness of the component (1) at its top end face (12), **characterised in that** the side of the slot (20) disposed closer to the component (1) and the top edge (11) of the adjacent component underneath adjacent to the top end face (12) lie on the same surface of the support element (27) and the component (1) has at least one panel part (2) and a frame (3) at least partially surrounding the panel part (2).

2. Roof or wall covering as claimed in claim 1, **characterised in that** the retaining element (6) is disposed on the frame (3).

3. Roof or wall covering as claimed in claim 2, **characterised in that** the retaining element (6) is integrally joined to the frame (3).

4. Roof or wall covering as claimed in one of the preceding claims, **characterised in that** the frame (3) is made from plastic and is preferably manufactured by an injection moulding process.

5. Roof or wall covering as claimed in claim 4, **characterised in that** the panel part (2) is joined to the frame (3) by injecting round the panel part (2).

6. Roof or wall covering as claimed in one of the preceding claims, **characterised in that** the support element (27) is provided in the form of a profiled bar designed to be attached to the underlying construction (4) and has a leg (21) pointing in the upward direction (18) from the base surface intended to lie on the underlying construction (4).

7. Roof or wall covering as claimed in one of the preceding claims, **characterised in that** in the overlap region between the components (1), the bottom edge (5) of the component (1) on the surface facing the support element (27) and/or the top edge (11) of the component (1) on the surface facing the support element (27) is roughened or is provided with ridges and/or ribs.

8. Roof or wall covering as claimed in one of the preceding claims, **characterised in that** the side edges (7, 8) of every component (1) have elements (30, 31) which form a sealing engagement with co-operating elements (31, 30) of the horizontally adjacent component.

9. Roof or wall covering as claimed in one of the preceding claims, **characterised in that** the frame (3) does not project beyond the panel part (2) at the bottom edge (5) perpendicular to the plane of the panel part (2).

10. Roof or wall covering as claimed in one of the preceding claims, **characterised in that** the component (1) contains a flat element (22) made from an inflammable material on its internal face (16).

11. Roof or wall covering as claimed in one of the preceding claims, **characterised in that** at least a part of the panel part (2) is designed as a photovoltaic element or contains one.

12. Roof or wall covering as claimed in claim 11, **characterised in that** the width of the frame (3) at the top edge (11) of the component (1) and the distance between the support elements (27) are selected so that the bottom edge (5) of the adjacent component (1) above does not project beyond the photovoltaic element or projects by a maximum of 5% across the vertical length of the photovoltaic element.

13. Roof or wall covering as claimed in claim 11 or 12, **characterised in that** an electric terminal point (19) is disposed in the top edge (11) of the component, which is preferably accessible from the end face (12) of the top edge (11).

14. Roof or wall covering as claimed in one of claims 11 to 13, **characterised in that** the photovoltaic elements are disposed on the internal face (16) of the panel part (2) and the frame (3) is designed so that it constitutes the watertight encapsulation of the photovoltaic elements and the external face (23) of the panel part (2) is watertight.

## Revendications

1. Revêtement de toiture ou de façade constitué d'éléments de construction (1) en forme de panneaux imbriqués comportant des éléments de fixation (6) et des éléments de support (27), dans lequel, position d'utilisation, chaque élément de construction (1) comporte un bord supérieur (11) et un bord inférieur (5), des bords latéraux (7, 8), un côté extérieur (23) et un côté intérieur (16), dans lequel chaque élément de construction (1) comporte au moins un élément de fixation (6) qui est disposé sur le côté intérieur (16) de l'élément de construction (1) à orienter vers le bâtiment, dans lequel chaque élément de construction (1) est fixé, par le au moins un élément de fixation (6), à un élément de support (27) disposé sensiblement horizontalement en ce qu'une fente (20) ouverte vers le bas, présente dans l'élément de fixation (6), recouvre l'élément de support (27) à la manière d'un crampon, dans lequel le au moins un élément de fixation (6) est disposé sur l'élément de construction (1) à proximité du bord inférieur (5) de l'élément de construction (1) orienté sensiblement horizontalement et la fente (20) de l'élément de fixation (6) recouvrant l'élément de support (27) est plus proche de ce bord inférieur (5) que le côté frontal supérieur (12) de l'élément de construction (1) et la distance entre la fente (20) et le côté intérieur (16) de l'élément de construction correspond au moins à l'épaisseur de l'élément de construction (1) sur le côté frontal supérieur (12) de celui-ci, **caractérisé en ce que** le côté de la fente (20) se trouvant plus près de l'élément de construction (1) et le bord supérieur (11) adjacent au côté frontal supérieur (12) de l'élément de construction adjacent en dessous sont posés sur la même surface de l'élément de support (27) et **en ce que** l'élément de construction (1) est constitué d'au moins une partie de panneau (2) et d'un cadre (3) entourant au moins partiellement la partie de panneau (2).

2. Revêtement de toiture ou de façade selon la revendication 1, **caractérisé en ce que** l'élément de fixation (6) est placé sur le cadre (3).

3. Revêtement de toiture ou de façade selon la revendication 2, **caractérisé en ce que** l'élément de fixation (6) est assemblé d'un seul tenant avec le cadre (3).

4. Revêtement de toiture ou de façade selon l'une quelconque des revendications précédentes, **caractérisé en ce que** le cadre (3) est fait en matière plastique et est fabriqué, de préférence, à l'aide d'un procédé de moulage par injection.

5. Revêtement de toiture ou de façade selon la revendication 4, **caractérisé en ce que** la partie de panneau (2) est assemblée avec le cadre (3) par enrobage par injection de la partie de panneau (2).

6. Revêtement de toiture ou de façade selon l'une quelconque des revendications précédentes, **caractérisé en ce que** l'élément de support (27) est conçu comme une barre profilée à fixer sur une infrastructure (4) qui comporte un montant (21) dirigé vers le haut, espacé de la surface de base destinée à être posée sur l'infrastructure (4).

7. Revêtement de toiture ou de façade selon l'une quelconque des revendications précédentes, **caractérisé en ce que**, dans la zone de chevauchement entre les éléments de construction (1), le bord inférieur (5) de l'élément de construction (1) sur la face dirigée vers l'élément de support (27) et/ou le bord supérieur (11) de l'élément de construction (1) sur la face opposée à l'élément de support (27) est rendu rugueux ou muni de striures et/ou de nervures.

8. Revêtement de toiture ou de façade selon l'une quelconque des revendications précédentes, **caractérisé en ce que** les bords latéraux (7, 8) de chaque élément de construction (1) sont réalisés avec des éléments (30, 31) qui sont en prise étanche avec des éléments correspondants (31, 30) de l'élément de construction horizontalement adjacent.

9. Revêtement de toiture ou de façade selon l'une quelconque des revendications précédentes, **caractérisé en ce que**, sur le bord inférieur (5) de la partie de panneau (2), le cadre (3) ne déborde perpendiculairement au plan de la partie de panneau (2).

10. Revêtement de toiture ou de façade selon l'une quelconque des revendications précédentes, **caractérisé en ce que** l'élément de construction (1) comprend un élément plat (22) fait en un matériau ininflammable sur son côté intérieur (16).

11. Revêtement de toiture ou de façade selon l'une quelconque des revendications précédentes, **caractérisé en ce qu'**au moins une partie de la partie de panneau (2) est conçue comme un élément photovoltaïque ou contient des éléments de ce type.

12. Revêtement de toiture ou de façade selon la revendication 11, **caractérisé en ce que**, sur le bord supérieur (11) de l'élément de construction (1), le cadre (3) est si large et la distance entre les éléments de support (27) est choisie de telle manière que le bord inférieur (5) de l'élément de construction (1) adjacent au-dessus ne déborde pas au-dessus de l'élément photovoltaïque ou déborde au maximum sur 5% de la longueur verticale de l'élément photovoltaïque.

13. Revêtement de toiture ou de façade selon la revendication 11 ou 12, **caractérisé en ce qu'**au moins un point de raccordement électrique (19), qui est accessible, de préférence, par le côté frontal (12) du bord supérieur (11), est placé dans le bord supérieur (11) de l'élément de construction.

14. Revêtement de toiture ou de façade selon l'une quelconque des revendications 11 à 13, **caractérisé en ce que** les éléments photovoltaïques sont placés sur le côté intérieur (16) de la partie de panneau (2), **en ce que** le cadre (3) est réalisé de telle manière qu'il forme le blindage étanche à l'eau des éléments photovoltaïques et **en ce que** le côté extérieur (23) de la partie de panneau (2) est étanche à l'eau.
